# FASCICULE DE BREVET EUROPEEN

(11) **EP 0 619 636 B1**
(45) Date de publication et mention de la délivrance du brevet: **16.07.1997**
(21) Numéro de dépôt: 94400753.3
(22) Date de dépôt: 06.04.1994
(51) Int. Cl.: H02G 15/18, H02G 1/14, B29C 61/06

(54) **Organe support pour un manchon élastique et manchon élastique maintenu dans un état expansé par un organe support amovible**
Vorrichtung zum Tragen einer elastischen Muffe und durch eine entfernbare Tragvorrichtung in ausgedehntem Zustand gehaltene elastische Muffe
Device for supporting an elastic sleeve and elastic sleeve maintained in an expanded condition by a removable supporting device

(30) Priorité: 09.04.1993 FR 9304267
(43) Date de publication de la demande: 12.10.1994
(73) Titulaire: SAT (Société Anonyme de Télécommunications), 75116 Paris (FR)
(72) Inventeur: Arette-Hourquet, Damien, F-77130 Cannes-Ecluse (FR); Tissier, Guy, F-77130 St-Germain Laval (FR)
(74) Mandataire: Fruchard, Guy

(56) Documents cités:
- WO-A-83/00779
- FR-A- 2 086 837
- FR-A- 2 677 916
- US-A- 4 506 430

## Description

La présente invention concerne un organe support amovible pour un manchon élastique et un manchon élastique maintenu en position expansée par un organe support amovible.

On connaît des organes supports en hélice pour maintenir un manchon élastique dans un état radialement expansé. Ces organes supports permettent de maintenir le manchon dans l'état expansé jusqu'à son positionnement au-dessus d'un objet à protéger, par exemple un raccord entre deux câbles électriques ou une extrémité d'un câble électrique, puis de rétracter le manchon élastique sur l'objet à protéger en tirant sur une extrémité de l'hélice afin de dérouler celle-ci à l'intérieur du manchon.

Dans les dispositifs connus, notamment du document US-A-3.515.798, le support amovible est constitué par l'hélice elle-même dont les spires sont solidaires pour former un tube support rigide maintenant le manchon élastique en position expansée. Par exemple, dans le document précité, l'organe support est formé par un tube en une matière plastique rigide, telle qu'un polymère de chlorure de polyvinyle, comportant une rainure hélicoïdale délimitant une bande en hélice dont une extrémité s'étend à l'intérieur du tube pour former un tronçon de bande de traction qui permet de rompre la partie de paroi restante au niveau de la rainure et de dérouler ainsi la bande formant le tube support pour permettre une rétraction du manchon élastique.

Il est également connu du document FR 2.677.916, un organe support du type décrit ci-dessus et comportant un tube outil monté pour pivoter et coulisser à l'intérieur du tube support, l'extrémité de l'hélice du tube support étant engagée dans une ouverture du tube outil. Lors de la rétraction le tube outil est entraîné en rotation et provoque un déroulement du tube support à l'intérieur du manchon élastique.

D'autres modes de réalisation sont connus consistant à enrouler une bande en hélice et à coller ou à souder les spires entre elles, ou encore à disposer des entretoises longitudinales dans un tube et à réaliser des fentes hélicoïdales entre les entretoises.

Dans tous ces modes de réalisation, il est nécessaire d'effectuer un compromis entre une solidité suffisante des moyens de liaison entre les spires de l'hélice pour s'assurer que l'organe support résiste à la pression du manchon élastique, et une résistance suffisamment faible des moyens de liaison entre les spires de l'hélice pour permettre une rupture de ces moyens de liaison lorsqu'une traction est exercée sur l'extrémité de la bande pour dérouler l'organe support.

Selon l'invention, on propose un organe support pour un manchon élastique comportant au moins un tronçon de tube rigide sur lequel un jonc intercalaire en matériau déformable est enroulé en hélice, au moins une portion d'extrémité du jonc intercalaire s'étendant à l'intérieur du tube rigide.

Ainsi, lorsque l'organe support est disposé à l'intérieur d'un manchon élastique pour maintenir celui-ci dans un état radialement expansé, le manchon élastique prend appui sur le jonc intercalaire qui est lui-même supporté de façon très efficace par le tube rigide et, lorsqu'une traction est exercée sur l'extrémité du jonc intercalaire, le jonc intercalaire prend appui sur l'extrémité du tube et fait glisser celui-ci vers l'extrémité libre du manchon élastique sans qu'il soit nécessaire d'exercer une traction importante sur l'extrémité du jonc intercalaire.

Selon une version avantageuse de l'invention, le jonc intercalaire est réalisé en un matériau à faible coefficient de friction. Ainsi, on minimise l'effort de traction nécessaire sur le jonc intercalaire pour repousser le tube rigide vers l'extérieur.

Selon un aspect avantageux de l'invention, le jonc intercalaire comporte des spires se recouvrant et ayant des bords en saillie disposés pour s'engager avec un bord d'une spire adjacente. Ainsi, on évite un écartement des spires du jonc intercalaire lors de la mise en place du manchon élastique.

Selon un autre aspect avantageux de l'invention, le tronçon de tube rigide a un diamètre interne supérieur à un diamètre externe du manchon élastique dans un état rétracté. Ainsi, après avoir retiré le jonc intercalaire, on peut ramener le tube rigide au-dessus du manchon élastique et assurer une protection mécanique de celui-ci.

Selon encore un autre aspect avantageux de l'invention, le manchon élastique est maintenu dans un état expansé par trois tronçons de tube rigide disposés en succession à l'intérieur du manchon, deux tronçons de tube rigide adjacents aux extrémités du manchon étant recouverts d'un jonc intercalaire. Ainsi, lors de la mise en place du manchon élastique sur un objet à protéger, seuls les tronçons de tube rigide extrêmes sont extraits du manchon élastique pour permettre la rétraction du manchon élastique de sorte que le tronçon central assure une protection mécanique à l'intérieur du manchon élastique.

D'autres caractéristiques et avantages de l'invention apparaîtront à la lecture de la description qui suit de différents modes de réalisation non limitatifs de l'invention en relation avec les figures ci-jointes parmi lesquelles :
- la figure 1 est une vue en coupe axiale d'un manchon élastique maintenu dans un état expansé par un organe support amovible selon un premier mode de réalisation de l'invention,
- la figure 2 est une vue en coupe axiale d'un tronçon de jonc intercalaire en hélice selon une variante de réalisation de l'invention,
- la figure 3 est une vue en élévation partiellement écorchée d'un autre mode de réalisation de l'invention.

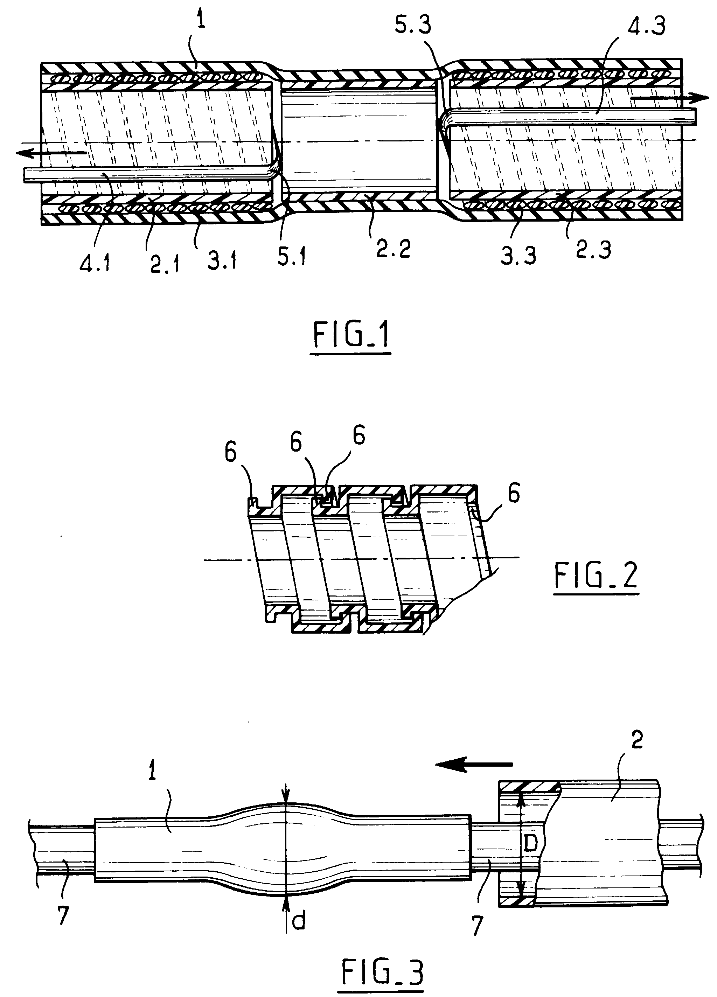

En relation avec la figure 1, l'organe support selon l'invention est destiné à maintenir un manchon élastique 1 dans un état radialement expansé pour permettre sa mise en place sur un objet à protéger non représenté, par exemple une jonction entre des câbles électriques.

Selon le mode de réalisation illustré sur la figure 1, l'organe support comporte trois tronçons de tube rigide portant la référence générale 2 et les références particulières 2.1, 2.2 et 2.3 permettant de les distinguer.

Les tronçons de tube rigide 2 sont réalisés en matière plastique rigide et comportent de préférence des surfaces internes et externes sensiblement lisses. Les tronçons de tube 2 sont par exemple réalisés par extrusion d'un polymère de chlorure de polyvinyle, puis tronçonnage selon les longueurs désirées. Les tronçons de tube rigide sont disposés en succession à l'intérieur du manchon.

Un jonc intercalaire portant la référence générale 3 est enroulé en hélice sur chacun des tronçons de tube rigide 2 adjacent à une extrémité du manchon élastique 1. Pour différencier les joncs intercalaires, le jonc intercalaire enroulé en hélice sur le tronçon de tube rigide 2.1 porte la référence particulière 3.1 tandis que le jonc intercalaire enroulé en hélice sur le tronçon de tube rigide 2.3 porte la référence particulière 3.3. Chacun des joncs intercalaires comporte une portion d'extrémité portant la référence générale 4, et respectivement les références particulières 4.1 et 4.3, qui s'étend à l'intérieur du tronçon de tube rigide correspondant vers l'extrémité adjacente du manchon élastique 1. La portion d'extrémité 4 forme à l'extrémité du tronçon de tube rigide correspondant qui est en regard du tronçon de tube rigide central 2.2, un coude portant la référence générale 5, et respectivement les références particulières 5.1 et 5.3, qui prend appui sur l'extrémité adjacente du tronçon de tube rigide extrême correspondant. Les joncs intercalaires 3 sont réalisés en matériau déformable ayant un faible coefficient de friction, par exemple en polyéthylène extrudé.

L'ensemble illustré sur la figure 1 est réalisé en atelier. Afin de permettre un montage aisé, le jonc intercalaire 3 est de préférence formé en hélice avant sa mise en place sur le tronçon de tube rigide 2 correspondant, soit par enroulement sur un mandrin ayant un diamètre externe sensiblement égal au diamètre externe d'un tronçon de tube rigide et passage dans une étuve, soit par enroulement à chaud sur un mandrin à la sortie de l'extrudeuse et refroidissement sur ce mandrin. Après la mise en place des joncs intercalaires sur les tronçons de tube rigide, le manchon élastique est mis en place par les techniques habituelles en le maintenant dans un état expansé radialement par des moyens mécaniques ou pneumatiques.

Dans le mode de réalisation de la figure 1, les tronçons de tube rigide 2 ont des diamètres internes égaux de façon à permettre une mise en place aisée de l'ensemble sur l'objet à protéger. Après mise en place de l'ensemble sur l'objet à protéger, les portions d'extrémité 4.1 et 4.3 des joncs intercalaires 3.1 et 3.3 sont successivement tirées vers l'extérieur comme illustré par les flèches en trait épais sur la figure 1. Sous l'effet de cette traction le coude 5 de la portion d'extrémité 4 prend appui sur l'extrémité adjacente du tronçon de tube rigide 2 correspondant et repousse celui-ci vers l'extérieur. Le manchon élastique n'est donc plus supporté et se rétracte donc sous l'objet à protéger au fur et à mesure du retrait du tronçon de tube rigide. Dans le cas illustré on remarquera que le tronçon de tube rigide 2.2 reste en place et empêche donc une rétraction du manchon élastique dans la partie centrale. Cette disposition sera de préférence utilisée lorsque l'on souhaite refermer les extrémités du manchon élastique sans exercer de pression sur l'objet disposé à l'intérieur de la partie centrale.

Dans le mode de réalisation illustré sur la figure 1, les joncs intercalaires 2 ont une section ovale et les spires de l'hélice sont simplement sensiblement jointives. Lorsque l'on souhaite pouvoir manipuler le jonc intercalaire lorsqu'il est enroulé en hélice sans risquer un écartement des spires, on réalise de préférence le jonc intercalaire comme illustré sur la figure 2. Dans ce mode de réalisation, le jonc intercalaire comporte des bords en saillie 6 alternativement vers l'intérieur et vers l'extérieur de façon que les spires se recouvrent et que l'un des bords d'une spire s'engage avec le bord d'une spire adjacente.

Bien entendu l'invention n'est pas limitée au mode de réalisation décrit sur la figure 1, et on peut en particulier maintenir le manchon élastique 1 dans un état expansé en utilisant un seul tronçon de tube rigide entièrement recouvert par un jonc intercalaire en hélice. Dans ce cas, qui est illustré par la figure 3, le manchon élastique 1 se rétracte sur la totalité de sa longueur et épouse la forme de l'objet à protéger, par exemple une jonction entre deux câbles électriques 7 comme illustré par la figure 3.

La figure 3 illustre un autre aspect avantageux de l'invention selon lequel le tronçon de tube rigide 2 a un diamètre interne D supérieur au diamètre externe d du manchon dans son état rétracté de sorte qu'après avoir fait coulisser le tronçon de tube rigide 2 vers l'extérieur du manchon pour permettre la rétraction de celui-ci, le tronçon de tube rigide 2 est ramené au-dessus du manchon élastique comme indiqué par la flèche en trait épais sur la figure 3 pour assurer une protection mécanique de l'objet protégé par le manchon élastique 1. Le tronçon de tube rigide 2 est alors maintenu en place par tout moyen approprié, par exemple au moyen d'un morceau de ruban adhésif enroulé autour de l'extrémité du tronçon de tube 2 et du câble 7 adjacent. Si l'on ne souhaite pas assurer une protection mécanique au moyen du tronçon de tube rigide 2, celui-ci peut également être découpé pour être retiré.

On remarquera que l'invention permet de ne pas être contraint à réaliser un compromis entre la solidité de l'organe support et sa facilité de retrait en raison de la dissociation de ces fonctions.

Bien entendu l'invention n'est pas limitée aux modes de réalisation décrits et on peut y apporter des variantes de réalisation sans sortir du cadre de l'invention telle que définie par les revendications. En particulier, bien que le jonc intercalaire ait été décrit soit avec des spires sensiblement jointives soit avec des spires se recouvrant, on peut prévoir un jonc intercalaire enroulé en hélice avec des spires légèrement écartées les unes des autres.

Dans le cas d'un manchon élastique maintenu dans un état expansé par un seul tronçon de tube rigide, on peut également prévoir que les deux portions d'extrémité du jonc intercalaire s'étendent à l'intérieur du tronçon de tube rigide afin de permettre indifféremment l'extraction du tronçon de tube rigide par l'une quelconque des extrémités.

## Revendications

1. Organe support pour un manchon élastique (1) comportant au moins un tronçon de tube rigide (2) sur lequel un jonc intercalaire (3) en matériau déformable est enroulé en hélice, au moins une portion d'extrémité du jonc intercalaire s'étendant à l'intérieur du tronçon de tube rigide.

2. Organe support selon la revendication 1, caractérisé en ce que le jonc intercalaire (3) est réalisé en un matériau à faible coefficient de friction.

3. Organe support selon la revendication 1 ou la revendication 2, caractérisé en ce que le jonc intercalaire comporte des spires se recouvrant et ayant des bords en saillie disposés pour s'engager avec un bord d'une spire adjacente.

4. Organe support selon l'une des revendications 1 à 3, caractérisé en ce que le tronçon de tube rigide (2) a un diamètre interne (D) supérieur à un diamètre externe (d) du manchon élastique (1) dans un état rétracté.

5. Manchon élastique maintenu dans un état expansé par un organe support amovible disposé à l'intérieur du manchon élastique (1), cet organe support comportant au moins un tronçon de tube rigide (2) sur lequel un jonc intercalaire (3) en matériau déformable est enroulé en hélice, au moins une portion d'extrémité (4) du jonc intercalaire (3) s'étendant à l'intérieur du tronçon de tube rigide (2).

6. Manchon élastique selon la revendication 5, caractérisé en ce qu'il comporte trois tronçons de tube rigide (2) disposés en succession à l'intérieur du manchon, deux tronçons de tube rigide (2.1, 2.3) adjacents aux extrémités du manchon élastique (1) étant recouverts par un jonc intercalaire (3.1, 3.3).

7. Manchon élastique selon la revendication 6, caractérisé en ce que les trois tronçons de tube (2) ont des diamètres internes identiques.

## Patentansprüche

1. Trägerelement für eine elastische Muffe (1), umfassend mindestens einen starren Rohrabschnitt (2), um den ein Zwischenwulst (3) aus einem verformbarem Material schraubenförmig herumgewickelt ist, wobei sich mindestens ein Endabschnitt des Zwischenwulstes im Inneren des starren Rohrabschnittes erstreckt.

2. Trägerelement nach Anspruch 1, dadurch **gekennzeichnet**, daß der Zwischenwulst (3) aus einem Material mit einem niedrigen Reibungskoeffizienten gebildet ist.

3. Trägerelement nach Anspruch 1 oder Anspruch 2, dadurch **gekennzeichnet**, daß der Zwischenwulst Spiralwindungen hat, die sich überlappen und vorkragende Ränder haben, um mit dem Rand einer benachbarten Windung in Eingriff zu treten.

4. Trägerelement nach einem der Ansprüche 1 bis 3, dadurch **gekennzeichnet**, daß der starre Rohrabschnitt (2) einen Innendurchmesser (D) hat, der größer ist als ein Außendurchmesser (d) der elastischen Muffe (1) in einem zusammengezogenen Zustand.

5. Elastische Muffe, die von einem im Inneren der elastischen Muffe (1) angeordneten entfernbaren Trägerelement in einem ausgedehnten Zustand gehalten wird, wobei das Trägerelement mindestens einen starren Rohrabschnitt (2) umfaßt, um den ein Zwischenwulst (3) aus einem verformbaren Material schraubenförmig herumgewickelt ist, und wobei sich mindestens ein Endabschnitt (4) des Zwischenwulstes (3) im Inneren des starren Rohrabschnittes (2) erstreckt.

6. Elastische Muffe nach Anspruch 5, dadurch **gekennzeichnet**, daß sie drei starre Rohrabschnitte (2) umfaßt, die hintereinander im Inneren der Muffe angeordnet sind, wobei zwei den Enden der elastischen Muffe (1) benachbarte starre Rohrabschnitte (2.1, 2.3) von einem Zwischenwulst (3.1, 3.3) bedeckt sind.

7. Elastische Muffe nach Anspruch 6, dadurch **gekennzeichnet**, daß die drei Rohrabschnitte (2) den gleichen Innendurchmesser haben.

## Claims

1. A support member for an elastic sleeve (1) comprising at least one rigid tube portion (2) on which an interposed rod (3) of deformable material is wound in a helix, at least one end portion of the interposed rod extending in the interior of the rigid tube portion.

2. A support member according to claim 1 characterised in that the interposed rod (3) is made of a material with a low coefficient of friction.

3. A support member according to claim 1 or claim 2 characterised in that the interposed rod comprises turns which overlap and which have edges in projecting relationship which are disposed to engage with an edge of an adjacent turn.

4. A support member according to one of claims 1 to 3 characterised in that the rigid tube portion (2) is of an inside diameter (D) that is larger than an outside diameter (d) of the elastic sleeve (1) in a retracted state.

5. An elastic sleeve which is held in an expanded state by a removable support member disposed in the interior of the elastic sleeve (1), said support member comprising at least one rigid tube portion (2) on which an interposed rod (3) of deformable material is wound in a helix, at least one end portion (4) of the interposed rod (3) extending in the interior of the rigid tube portion (2).

6. An elastic sleeve according to claim 5 characterised in that it comprises three rigid tube portions (2) disposed in succession in the interior of the sleeve, two rigid tube portions (2.1, 2.3) which are adjacent to the ends of the elastic sleeve (1) being covered by an interposed rod (3.1, 3.3).

7. An elastic sleeve according to claim 6 characterised in that the three tube portions (2) are of identical inside diameters.
